# EUROPÄISCHE PATENTSCHRIFT

(11) **EP 2 696 707 B1**
(45) Veröffentlichungstag und Bekanntmachung des Hinweises auf die Patenterteilung: **06.06.2018**
(21) Anmeldenummer: 12714963.1
(22) Anmeldetag: 02.04.2012
(51) Int. Cl.: A24C 5/32, A24C 5/47, B65G 29/00

(54) **FÖRDERUNG VON STABFÖRMIGEN ARTIKELN DER TABAK VERARBEITENDEN INDUSTRIE**
CONVEYING ROD-SHAPED ARTICLES OF THE TOBACCO PROCESSING INDUSTRY
TRANSPORT D'ARTICLES EN FORME DE TIGE DE L'INDUSTRIE DE TRANSFORMATION DU TABAC

(30) Priorität: 14.04.2011 DE 102011007429
(43) Veröffentlichungstag der Anmeldung: 19.02.2014
(73) Patentinhaber: Hauni Maschinenbau GmbH, 21033 Hamburg (DE)
(72) Erfinder: MAIWALD, Berthold, 21493 Schwarzenbek (DE); SCHLISIO, Siegfried, 21502 Geesthacht (DE); FOLGER, Manfred, 21035 Hamburg (DE); PLÄHN, Dieter, 21357 Barum (DE); KLEINE WÄCHTER, Michael, 23881 Lankau (DE)
(74) Vertreter: Seemann & Partner Patentanwälte mbB
(86) Internationale Anmeldenummer: PCT/EP2012/001452
(87) Internationale Veröffentlichungsnummer: WO 2012/139719

(56) Entgegenhaltungen:
- WO-A1-2010/012420
- DE-T2- 69 605 142
- DE-U1-202009 017 838

## Beschreibung

Die Erfindung betrifft ein Verfahren zum Fördern von stabförmigen Artikeln der Tabak verarbeitenden Industrie, insbesondere Filterzigaretten oder deren stabförmigen Komponenten, wobei die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von den Zigaretten und Filterstäben werden im Sinne der Erfindung auch Abschnitte von Papier und dergleichen aus flächigem und/oder bahnförmigem Material verstanden, z.B. Abschnitte und/oder Bahnen von Zigarettenpapier, Filterpapier oder Belagpapier zum Verbinden von Tabakstücken mit Filterstopfen.

Das Fördern der vorgenannten Gegenstände während der Herstellung von Zigaretten, Filtern sowie Filterzigaretten wird bei modernen Produktionsmaschinen der Tabak verarbeitenden Industrie im Allgemeinen mittels Fördertrommeln durchgeführt, deren Mantelfläche zum Fördern von stabförmigen Gegenständen als stabförmige Komponenten (Zigaretten, Filterstäben oder Filterstopfen, Filterzigaretten) mit Mulden zum Aufnehmen der Gegenstände versehen sind. Zum Fördern von blattförmigen und/oder bahnförmigen Gegenständen (Belagpapierabschnitte und/oder -bahnen) sind Fördertrommeln vorgesehen, deren Mantelflächen im Wesentlichen glatt ist.

Während der Förderung werden diese Gegenstände der Tabak verarbeitenden Industrie von Saugluft auf den Fördertrommeln gehalten, die an entsprechenden Kanälen, meist Bohrungen, anliegt. Diese Kanäle sind im Allgemeinen in Reihen angeordnet, deren Längen den Abmessungen der zu transportierenden Gegenstände quer zur Transportrichtung entsprechen.

In Filteransetzmaschinen werden auf den Fördertrommeln stabförmige Artikel, wie z.B. Tabakstöcke oder Filterstopfen bzw. Filterstäbe, queraxial in Aufnahmemulden der Fördertrommel gefördert. Hierbei sind die Aufnahmemulden in vorbestimmten Teilungsabständen auf der Umfangsfläche der Fördertrommel angeordnet.

Unter Teilungsabstand wird der queraxiale Abstand der Aufnahmemulden verstanden. Der Abstand wird dabei vom Muldenmittelpunkt der Aufnahmemulde zum darauffolgenden Muldenmittelpunkt der benachbarten Aufnahmemulde des auf der Oberfläche die stabförmigen Rauchartikel(gruppen) transportierenden Muldenförderers oder von Muldengrund zu Muldengrund bei z.B. einer prismenförmigen Aufnahmemulde gemessen. Der Teilungsabstand bei einem Trommelförderer, auch als Fördertrommel bezeichnet, ist der queraxiale Abstand bzw. die Länge des (Kreis-)Bogens zwischen (benachbarten) Muldenmittelpunkten auf der Kreislinie, auf der die Muldenmittelpunkte bzw. Muldenmittelpunktsachsen der Mulden angeordnet sind.

Ferner ist in DE-U- 20 2009 017 838 eine Fertigungsmaschine zum Herstellen von Kombinationsfiltern für Zigaretten beschrieben. Die Fertigungsmaschine weist hierbei eine Gruppenformierungseinheit, eine Wickeleinheit und eine Transporteinheit auf.

Überdies ist in EP-A-1 518 468 eine Fördertrommel der Tabak verarbeitenden Industrie zum Transport für stabförmige Artikel offenbart, wobei die Fördertrommel eine Spanneinrichtung für einen Trommelkörper aufweist.

Ausgehend von diesem Stand der Technik besteht die Aufgabe der vorliegenden Erfindung darin, an einer Maschine der Tabak verarbeitenden Industrie, beispielsweise einer Filteransetzmaschine, einen Durchmesserformatwechsel auf einfache Weise zu ermöglichen, wobei der konstruktive Aufwand möglichst gering gehalten werden soll.

Gelöst wird diese Aufgabe durch ein Verfahren zum Fördern von stabförmigen Artikeln der Tabak verarbeitenden Industrie, insbesondere Filterzigaretten oder deren stabförmigen Komponenten, wobei die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden, wobei das Verfahren dadurch weitergebildet wird, dass bei einem Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, die für die Förderung der stabförmigen Artikel vorgesehenen Fördertrommeln beibehalten werden, wobei für den Wechsel der zu fördernden stabförmigen Artikel wenigstens eine Fördertrommel in ihrer Rotationsachse in Bezug auf wenigstens eine benachbarte, insbesondere stabförmige Artikel abgebende und/oder stabförmige Artikel aufnehmende, Fördertrommel und deren, insbesondere ortsfeste, Rotationsachse versetzt wird, so dass der Abstand der Rotationsachsen der benachbarten Fördertrommeln für die Förderung der stabförmigen Artikel der ersten Art gegenüber dem Abstand der Rotationsachsen der benachbarten Fördertrommel für die Förderung der stabförmigen Artikel der zweiten Art verändert ist oder wird.

Die Erfindung beruht auf dem Gedanken, dass bei einer Maschine der Tabak verarbeitenden Industrie, bei der die stabförmigen Artikel unter Verwendung der vorgesehenen Fördertrommeln queraxial gefördert werden, kein Austausch der Fördertrommeln an der Maschine erfolgt, wenn ein Formatwechsel, d.h. ein Wechsel der zu fördernden stabförmigen Artikel, die sich im Durchmesser unterscheiden, durchgeführt wird oder ist.

Dadurch wird ein schneller Produktwechsel an beispielsweise einer Filteransetzmaschine ermöglicht, da beispielsweise bei einem schnellen Wechsel der Herstellung von Filterzigaretten mit einem ersten Durchmesser von beispielsweise 8 mm (als stabförmige Artikel einer ersten Art) zu herzustellenden Filterzigaretten mit einem Durchmesser von 5 mm (als Artikel einer zweiten Art) durch eine vertikale und/oder horizontale (Verschiebe-)Bewegung einer Fördertrommel zwischen einer in Förderrichtung der stabförmigen Artikel stromaufwärts angeordneten, stabförmige Artikel abgebenden Fördertrommel und einer in Förderrichtung nachfolgenden, stabförmige Artikel aufnehmenden Fördertrommel der Abstand der Rotationsachsen der Fördertrommeln so eingestellt wird, dass die stabförmigen Artikel ohne mechanische Beeinträchtigung von Fördertrommel zu Fördertrommel nach einem Formatwechsel transportiert werden, wobei die mechanische Belastung der fragilen geförderten stabförmigen Artikel im Übergabebereich oder Übergabepunkt zwischen zwei Fördertrommel herabgesetzt oder minimiert ist, wodurch die zu fördernden Artikel schonend von Fördertrommel zur nachfolgenden Fördertrommel übergeben werden.

Hierdurch wird unter Verwendung derselben Fördertrommeln für die stabförmigen Artikel der ersten Art und für die Artikel der zweiten Art auf einfache Weise der relative Abstand der Rotationsachsen der Fördertrommeln zueinander eingestellt, wobei die Fördertrommein ansonsten nicht baulich verändert oder ausgetauscht werden.

Insbesondere wird der Abstand der Rotationsachsen der benachbarten Fördertrommeln für die Förderung der stabförmigen Artikel der ersten Art gegenüber dem Abstand der Rotationsachsen der benachbarten Fördertrommel für die Förderung der stabförmigen Artikel der zweiten Art in Abhängigkeit der Durchmesser der zu fördernden stabförmigen Artikel (der ersten und zweiten Art) verändert, wodurch der Abstand der Rotationsachsen der Fördertrommeln vergrößert oder verkleinert wird.

Nach Beendigung der Produktion von stabförmigen Artikeln einer ersten Art werden für die Förderung der stabförmigen Artikel der zweiten Art eine Fördertrommel in Bezug auf die unmittelbar an die Fördertrommel angrenzenden Fördertrommeln entsprechend verschoben, ohne dass die Ausrichtung der Rotationsachse der versetzten Trommel verändert wird, d.h. dass die Rotationsachse der versetzten Trommel achsparallel verschoben wird.

Unter stabförmigen Artikeln der Tabak verarbeitenden Industrie im Rahmen der Erfindung werden stabförmige Gegenstände, wie z.B. Zigaretten, Filterstäbe oder Filterstopfen oder deren (stabförmige) Komponenten verstanden.

Unter dem Begriff "stabförmige Artikel einer ersten Art" wird eine bestimmte Sorte an zu fördernden stabförmigen Gegenständen verstanden, die einen vorbestimmten Durchmesser aufweisen und beispielsweise an einer Filteransetzmaschine queraxial gefördert werden. Unter dem Begriff "stabförmige Artikel einer zweiten Art" wird eine bestimmte Sorte an zu fördernden stabförmigen Gegenständen der Tabak verarbeitenden Industrie verstanden, die einen vorbestimmten Durchmesser aufweisen und beispielsweise an einer Filteransetzmaschine queraxial gefördert werden und sich im Durchmesser von den stabförmigen Artikeln der ersten Art unterscheiden.

Bei einem Produktionswechsel oder Formatwechsel an einer Filteransetzmaschine von zu fördernden oder geförderten stabförmigen Artikeln einer ersten Art zu einer zweiten Art bestehen daher Unterschiede im Durchmesser der zu fördernden stabförmigen Artikel.

Der Vorteil der Erfindung besteht darin, dass mehrere stabförmige Artikel unterschiedlichen Durchmessers an einer Filteransetzmaschine gefördert und produziert werden und für jede geförderte Art von stabförmigen Artikeln jeweils dieselben Fördertrommeln vorgesehen sind, wodurch die Maßnahmen bei einem Wechsel von zu fördernden stabförmigen Artikeln einer ersten Art zu stabförmigen Artikeln einer zweiten Art erheblich reduziert werden, da ein Austausch der Förderorgane vermieden wird bzw. nicht ausgeführt wird.

Beispielsweise werden an einer Filteransetzmaschine zwei unterschiedliche Zigarettenformate verarbeitet oder hergestellt, wobei die Zigaretten der unterschiedlichen Formate sich im Durchmesser der Zigaretten unterscheiden. Beispielsweise werden Zigarettenformate mit einem Durchmesser von 8 mm (als stabförmige Artikel der ersten Art) und mit einem Durchmesser von 5 mm (als stabförmige Artikel der zweiten Art) an derselben Filteransetzmaschine hergestellt. Hierbei sind die Fördertrommeln zur Aufnahme von stabförmigen Artikeln jeweils mit Aufnahmemulden mit einem konstanten, d.h. unveränderten Muldendurchmesser jeweils ausgebildet, wobei insbesondere die Aufnahmemulden derart ausgebildet sind, dass sie sowohl stabförmige Artikel mit einem großen Durchmesser und stabförmige Artikel mit einem kleinen Durchmesser aufnehmen und während der Rotation der Fördertrommel sicher in den Aufnahmemulden gehalten werden.

Insbesondere sind die Aufnahmemulden der Fördertrommeln an den größten Durchmesser der zu verarbeitenden stabförmigen Artikel angepasst, so dass für jedes zu verarbeitende Format jeweils dieselben Aufnahmen der beibehaltenen Fördertrommeln bereitgestellt werden.

Durch die Anpassung der Abstände der Rotationsachsen der zueinander benachbarten Fördertrommeln durch eine vertikale und/oder horizontale, vorzugsweise durch eine senkrecht zur Verbindungslinie durch die Mittelpunkte der benachbarten Trommeln ausgeführte, Bewegung wenigstens einer Fördertrommel wird bei einem Wechsel der zu fördernden stabförmigen Artikel bei Förderung der stabförmigen Artikel eine annähernd tangentiale Berührung der Fördertrommeln im Übergabebereich oder Übergabepunkt zwischen den Fördertrommeln gewährleistet sowie beibehalten, so dass bei einem Wechsel der zu fördernden stabförmigen Artikel mit unterschiedlichen Durchmessern unter Verwendung derselben Fördertrommeln nach einer Ausrichtung wenigstens einer Fördertrommel in Bezug auf ihre benachbarten Fördertrommeln eine Artikel schonende Förderung der Artikel erreicht wird.

Im Rahmen der Erfindung ist es vorgesehen, dass nicht nur eine Fördertrommel in Bezug auf ihre benachbarten Fördertrommeln bewegt oder versetzt wird, sondern dass mehrere benachbarte Fördertrommeln durch jeweils eine (vertikale und/oder horizontale) (Versatz-)Bewegung zueinander ausgerichtet werden, so dass ein schneller Produktionswechsel oder Produktwechsel an einer Maschine ermöglicht wird, wobei dieselben Fördertrommeln für die unterschiedlich dicken Artikelarten eingesetzt oder verwendet werden.

Dazu ist in einer Ausgestaltung außerdem vorgesehen, dass eine Fördertrommel, die zwischen einer Artikel abgebenden Fördertrommel und einer Artikel aufnehmenden Fördertrommel angeordnet ist, in Bezug auf die, vorzugsweise ortsfeste, Rotationsachse der Artikel abgebenden Fördertrommel und/oder in Bezug auf die Rotationsachse der Artikel aufnehmenden Fördertrommel, insbesondere linear, versetzt wird.

Ferner zeichnet sich eine bevorzugte Ausführung des Verfahrens dadurch aus, dass die stabförmigen Artikel der ersten Art und die stabförmigen Artikel der zweiten Art im Wechsel auf denselben Fördertrommeln, insbesondere einer Maschine der Tabak verarbeitenden Industrie, gefördert werden, wobei die Durchmesser und/oder die Konturen der, vorzugsweise nutförmigen oder U-förmigen, Aufnahmemulden der jeweiligen Fördertrommel konstant bleiben. Somit bleiben die (Kreis-)Durchmesser der Muldenmittenachsen der, vorzugsweise nutförmigen oder U-förmigen, Aufnahmemulden der jeweiligen Fördertrommel konstant. Insbesondere sind die Aufnahmemulden einer oder der Fördertrommel mit einem (dauerhaft) konstanten d.h. nicht veränderbaren Muldendurchmesser und/oder einer nicht veränderbaren Kontur oder Form ausgebildet.

Ferner ist eine Anordnung zum Fördern von stabförmigen Artikeln der Tabak verarbeitenden Industrie, insbesondere Filterzigaretten oder deren stabförmigen Komponenten, mit mehreren, mit um jeweils eine eigene Rotationsachse rotierenden oder rotierbaren Fördertrommeln zur queraxialen Förderung von stabförmigen Artikeln der Tabak verarbeitenden Industrie vorgesehen, wobei die Fördertrommeln in queraxialer Förderrichtung der stabförmigen Artikel hintereinander angeordnet sind, wobei die Fördertrommeln zur Aufnahme von stabförmigen Artikeln jeweils mit Aufnahmemulden ausgebildet sind, wobei die Anordnung dadurch weitergebildet wird, dass bei einem Wechsel der auf den Fördertrommeln zu fördernden oder geförderten stabförmigen Artikel einer ersten Art mit einem vorbestimmten Durchmesser zu stabförmigen Artikeln einer zweiten Art mit einem vorbestimmten Durchmesser, wobei sich die stabförmigen Artikel einer ersten Art von den stabförmigen Artikeln einer zweiten Art im Durchmesser unterscheiden, für die Förderung von stabförmigen Artikeln einer zweiten Art mit einem vorbestimmten Durchmesser unter Beibehaltung der Fördertrommeln mit jeweils einem konstanten Muldendurchmesser und/oder einer konstanten Muldenkontur der Aufnahmemulden für die stabförmigen Artikel der ersten Art und für die stabförmigen Artikel der zweiten Art eine Fördertrommel mit ihrer Rotationsachse in Bezug auf eine benachbarte, insbesondere stabförmige Artikel abgebende und/oder stabförmige Artikel aufnehmende, Fördertrommel und deren, vorzugsweise ortsfeste, Rotationsachse versetzt wird oder versetzbar ist, so dass der Abstand zwischen den Rotationsachsen der benachbarten Fördertrommeln für die Förderung der stabförmigen Artikel der ersten Art gegenüber dem Abstand der Rotationsachsen der benachbarten Fördertrommeln für die Förderung der stabförmigen Artikel der zweiten Art verändert ist oder wird.

Die erfindungsgemäße Förderanordnung bzw. Fördereinrichtung zum Fördern der stabförmigen Artikel weist mehrere hintereinander angeordnete Fördertrommeln auf, so dass die queraxial hintereinander in Reihe(n) angeordneten, stabförmigen Artikel queraxial gefördert werden. Insbesondere ist die Anordnung Teil einer Maschine der Tabak verarbeitenden Industrie, insbesondere Filteransetzmaschine.

Hierbei ist bei der erfindungsgemäßen Ausgestaltung der Anordnung vorgesehen, dass der relative Abstand der Rotationsachsen von zwei benachbarten, in Förderrichtung hintereinander angeordneten Fördertrommeln, d.h. eine stabförmige Artikel abgebende Fördertrommel und eine die stabförmigen Artikel aufnehmende Fördertrommel, angepasst wird, so dass bei geänderten Teilkreisdurchmessern der Mittenlängsachsen der zu fördernden stabförmigen Artikel eine Übergabe sowie ein sicherer Transport ohne mechanische Belastung der zu transportierenden oder transportierten stabförmigen Artikel der ersten oder der zweiten Art erreicht wird.

Zur Verstellung bzw. zum Bewegen der versetzbaren Fördertrommel sind beispielsweise manuell betätigbare mechanische Verstellmittel und/oder motorisch angetriebene Verstellmittel an der Filteransetzmaschine vorgesehen, die bevorzugt per Knopfdruck oder automatisiert durch eine oder die Maschinensteuerung betätigt werden.

Überdies ist es bei einer Weiterbildung der Anordnung vorteilhaft, dass die Muldendurchmesser und/oder Muldenkonturen der Aufnahmemulden der jeweiligen Fördertrommeln konstant bleiben und/oder dass die jeweilige oder die Durchmesser der Muldenmittenachsen der Aufnahmemulden der jeweiligen Fördertrommel und/oder aller Fördertrommeln konstant bleiben.

Insbesondere ist es bei einer Ausgestaltung der Anordnung günstig, dass die versetzbare Fördertrommel wenigstens linear versetzbar ist, wobei die Rotationsachse der versetzten Fördertrommel in ihrer Position für die Förderung der Artikel der ersten Art achsparallel verschoben wird oder ist gegenüber der Position für die Förderung der stabförmigen Artikel der zweiten Art.

Weiterhin zeichnet sich eine Ausführungsform der Anordnung dadurch aus, dass die versetzbaren Fördertrommeln wenigstens linear versetzbar sind, wobei die Rotationsachsen der versetzten Fördertrommeln in ihren Positionen für die Förderung der Artikel der ersten Art achsparallel verschoben werden oder sind gegenüber den Positionen für die Förderung der stabförmigen Artikel der zweiten Art.

Des Weiteren ist für eine bevorzugte Ausführungsform der Anordnung vorgesehen, dass bei Verwendung von n-ungeradzahligen (n = 1, 3, 5, 7, ...) Fördertrommeln bei einem Wechsel der zu fördernden stabförmigen Artikel wenigstens ((n-1)/2) Fördertrommeln in ihrer Position verändert werden oder sind oder dass bei Verwendung von m-geradzahligen (m = 2, 4, 6, ...) Fördertrommeln wenigstens (m/2) Fördertrommeln in ihrer Position verändert werden oder sind.

Ferner ist eine Maschine der Tabak verarbeitenden Industrie, insbesondere Filteransetzmaschine, zur Herstellung von stabförmigen Artikeln der Tabak verarbeitenden Industrie, insbesondere Filterzigaretten vorgesehen, die mit einer voranstehend beschriebenen Anordnung zum Fördern von stabförmigen Artikeln ausgebildet ist. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Filteransetzmaschine zum Herstellen von Filterzigaretten in einer Vorderansicht,
- Fig. 2a bis 2c: schematisch jeweils eine Ansicht einer Anordnung von Fördertrommeln einer Filteransetzmaschine.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

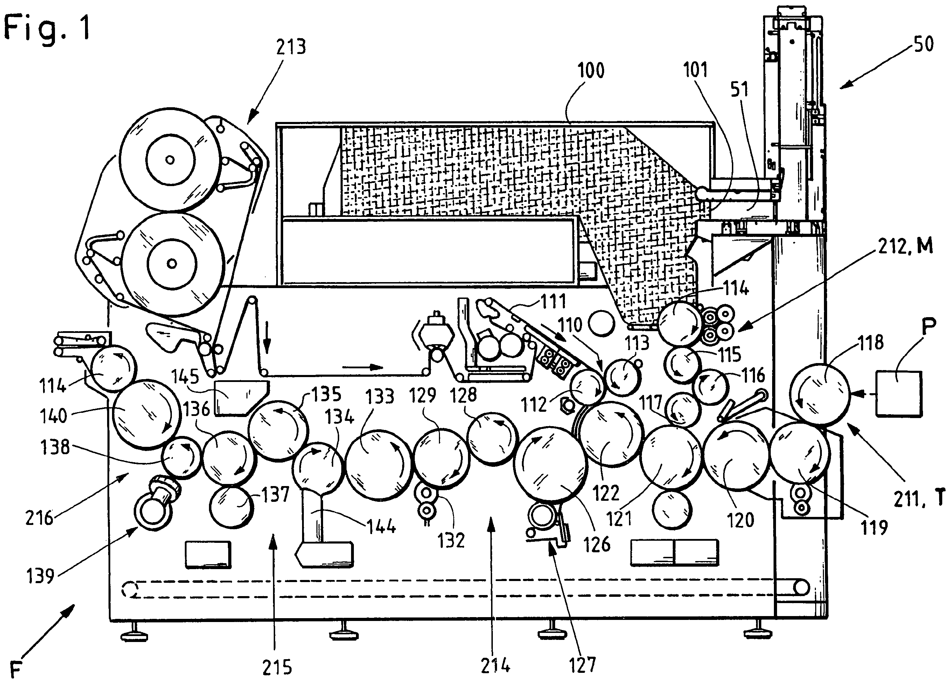

In Fig. 1 ist eine Filteransetzmaschine F in einer Vorderansicht ausschnittsweise dargestellt, wobei die Filteransetzmaschine F über eine Trommelanordnung T zur Zuführung von Tabakstöcken von einer schematisch eingezeichneten Zigarettenstrangmaschine P Tabakstöcke doppelter Gebrauchslänge empfängt.

Eine Zigarettenstrangmaschine ist unter der Bezeichnung "PRO-TOS" der HAUNI Maschinenbau AG, Hamburg, bekannt. Unter der Bezeichnung "MAX" ist eine Filteransetzmaschine der HAUNI Maschinenbau AG, Hamburg, als Maschine der Tabak verarbeitenden Industrie bekannt.

Die in Figur 1 schematisch gezeigte Filteransetzmaschine F weist verschiedene Funktionseinheiten auf: eine Tabakstockzufuhreinrichtung 211 mit einer Trommelanordnung T, eine Filterzufuhreinrichtung 212 mit einer Trommelanordnung M, eine Belagpapierzufuhreinrichtung 213, eine Zigarettenherstelleinrichtung 214, eine Zigarettenprüfeinrichtung 215 sowie eine Zigarettenabgabeeinrichtung 216.

Die Trommelanordnung T der Tabakstockzufuhreinrichtung 211 weist mehrere Fördertrommeln 118, 119, 120 auf. Nach der Übergabe der doppelt langen Tabakstöcke von der Zigarettenstrangmaschine P an eine Übernahmetrommel 118 werden die doppelt langen Tabakstöcke queraxial gefördert und an eine Schneidtrommel 119 übergeben, auf der die doppelt langen Tabakstöcke mittels eines an der Schneidtrommel 119 angeordneten Schneidmessers in einfach lange Tabakstöcke geschnitten werden. Von der Schneidtrommel 119 werden die Tabakstöcke einfacher Gebrauchslänge an eine Spreiztrommel 120 übergeben, auf der die geschnittenen Tabakstockpaare längsaxial voneinander beabstandet bzw. gespreizt werden. Anschließend werden die längsaxial beabstandeten Tabakstockpaare zur Zusammenstelltrommel 121 transportiert.

Auf ihrem Förderweg zu einer Zusammenstelltrommel 121 werden die Tabakstöcke doppelter Gebrauchslänge geschnitten und längsaxial gespreizt. Auf der Zusammenstelltrommel 121 werden doppeltlange Filterstopfen über eine weitere Trommelanordnung M der Filterzufuhreinrichtung 212 transportiert, die jeweils zwischen zwei längsaxial beabstandete Tabakstöcke eingefügt werden. Hierdurch wird auf der Zusammenstelltrommel 121 eine Folge von queraxial hintereinander angeordneten Tabakstock-Filterstopfen-Tabakstock-Gruppen gebildet.

Um doppeltlange Filterstopfen zwischen die längsaxial beabstandeten Tabakstockpaare auf der Zusammenstelltrommel 121 einzulegen bzw. anzuordnen, verfügt die Trommelanordnung M über eine Entnahmetrommel 114, mittels der Filterstäbe aus einem Filterstabmagazin 100 entnommen werden und unter Verwendung von an der Entnahmetrommel 114 angeordneten Schneidmessern in Filterstopfen doppelter Länge geschnitten werden. Anschließend werden die Filterstopfen an eine Spreiztrommel 115 und eine nachfolgende Staffeltrommel 116 übergeben. Die gestaffelten Filterstopfen doppelter Länge werden anschließend von der Staffeltrommel 116 an eine nachfolgende Einlegetrommel 117 übergeben und queraxial zu der Zusammenstelltrommel 121 gefördert, so dass auf der Zusammenstelltrommel 121 Artikelgruppen aus Tabakstock-Filterstopfen-Tabakstock-Gruppen gebildet werden.

Die zusammengestellten Artikelgruppen aus Tabakstock-Filterstopfen-Tabakstock-Gruppen werden von der Zusammenstelltrommel 121 an eine Fördertrommel 122 übergeben. Gleichzeitig werden von einem Belagapparat 110 der Belagpapierzufuhreinrichtung 213 Belagpapierblättchen den zusammengestellten Tabakstock-Filterstopfen-Tabakstock-Gruppen synchron zugeführt.

Ein beleimter und geförderter Belagpapierstreifen 111 wird hierbei im Belagapparat 110 auf einer Schneidtrommel 112 von den Messern einer Messertrommel 113 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 122 übergeben bzw. angeheftet.

Nach dem Anheften der geschnittenen und der einzelnen Verbindungsblättchen an jeweils eine Artikelgruppe werden die Artikelgruppen weiter zu einer nachfolgenden Rolltrommel 126 und einer Rolleinrichtung 127 transportiert, mittels der die Verbindungsblättchen vollständig um die Tabakstock-Filterstopfen-Tabakstock-Gruppen herumgewickelt werden. Die Rolleinrichtung 127 besteht in einer Ausgestaltung aus einem Stegrad, einer Rollhand mit einer Rollfläche und ausgangsseitig einer Rollwalze, wobei die Rollfläche und die Rolltrommel 126 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 128 und danach an eine als Schneidtrommel ausgebildete Fördertrommel 129 übergeben und für den weiteren Bearbeitungsprozess an einer Filteransetzmaschine bereitgestellt. An einer Schneidtrommel 129 ist ein Schneidmesser 132 angeordnet, welches aus den doppeltlangen Filterzigaretten durch einen mittigen Trennschnitt Filterzigaretten einfacher Gebrauchslänge herstellt.

Die Filterzigaretten einfacher Gebrauchslänge werden anschließend von der Schneidtrommel 129 an eine Spreiztrommel 133 übergeben. Auf der Spreiztrommel 133 werden die Filterzigarettenpaare längsaxial voneinander beabstandet und anschließend an eine erste doppelbahnige Prüftrommel 134 übergeben. An der Prüftrommel 134 ist ein erstes Prüforgan 144 angeordnet, welches die Filterzigaretten einer ersten Prüfung, z. B. einer Kopfendenprüfung, unterzieht.

Im Rahmen der Erfindung ist es möglich, dass die hergestellten Filterzigaretten an dem ersten Prüforgan 144 einer Dichtigkeitsprüfung und/oder einer Kopfendenprüfung und/oder einer Ventilationsprüfung unterzogen werden. Darüber hinaus ist es im Rahmen der Erfindung möglich, dass mittels des Prüforgans 144 eine optische Prüfung der Zigaretten auf der Trommel 134 durchgeführt wird.

Anschließend werden die Zigaretten von der Prüftrommel 134 an eine nachfolgende zweite Prüftrommel 135 übergeben, an der ein zweites Prüforgan 145 angeordnet ist, um die Zigaretten weiteren Qualitätsprüfungen und/oder mindestens einer der zuvor genannten an der Prüftrommel 134 nicht durchgeführten Prüfung zu unterziehen.

Von der Prüftrommel 135 werden die Filterzigaretten an eine Fördertrommel 136 übergeben. An der Fördertrommel 136 ist eine Probeentnahmetrommel 137 angeordnet, um gezielt einzelne Stichproben aus dem Artikelstrom der fertig hergestellten Filterzigaretten zu entnehmen.

Von der Fördertrommel 136 werden die beiden gebildeten Reihen mit queraxial hintereinander angeordneten Filterzigaretten einfacher Gebrauchslänge an eine Wendetrommel 138 mit einer an der Wendetrommel 138 angeordneten Wendeeinrichtung 139 übergeben, so dass bei Abgabe der Filterzigaretten von der Wendetrommel 138 an eine nachfolgende Fördertrommel 140 die Filterzigaretten in einer Reihe hintereinander queraxial angeordnet bzw. gefördert werden. Von der Fördertrommel 140 werden anschließend die hergestellten Filterzigaretten an eine Abgabetrommel 141 abgegeben, mittels der die Filterzigaretten an ein Ablegerband übergeben werden.

In dem Filtermagazin 100 werden die für die Filterzigarettenherstellung erforderlichen Filterstäbe bevorratet bereitgestellt, wobei die Filterstäbe über eine seitlich am Filtermagazin 100 angeordnete, Zuführeinrichtung 50 für die Filterstäbe befüllt werden. Mittels der Zuführeinrichtung 50 werden an der mit einem Einlass 101 ausgebildeten Zuführseite des Filtermagazins 100 als stabförmige Artikel Filterstäbe in den Vorratsraum bzw. Speicherraum des Filtermagazins 100 unter queraxialer Förderung in das Filtermagazin 100 eingebracht.

Die Zuführeinrichtung 50 verfügt über einen horizontalen Förderkanal 51, der am Einlass 101 des Filtermagazins 100 mündet und über den die von der Zuführeinrichtung 50 bereitgestellten stabförmigen Filterstäbe in das Filtermagazin 100 hineingefördert werden. Hierzu verfügt der Förderkanal 51 an seiner Unterseite über wenigstens ein Förderband, so dass die auf dem Förderband des Förderkanals 51 abgelegten Filterstäbe unter queraxialer Förderung der Filterstäbe über den Einlass zur Befüllung des Filtermagazins 100 hineingeschoben werden.

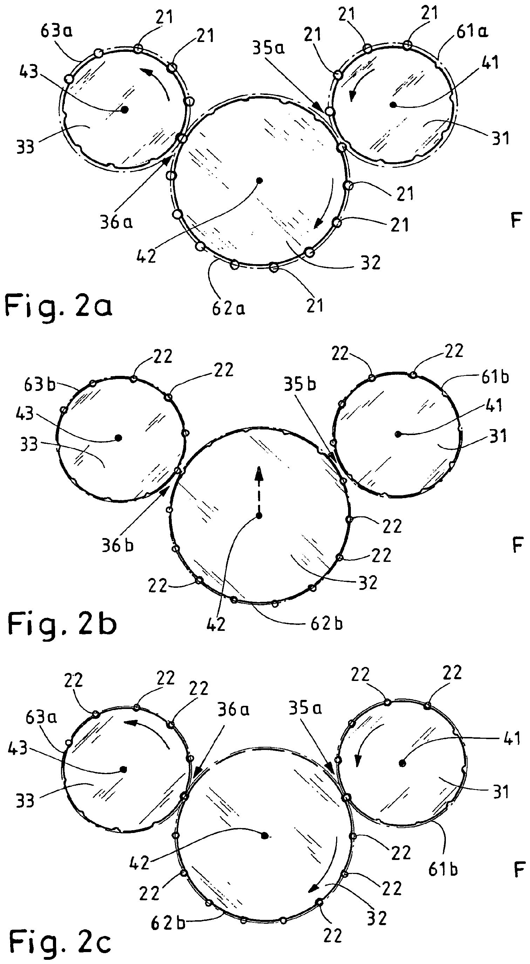

In den Fig. 2a bis 2c ist jeweils schematisch eine Anordnung von drei Fördertrommeln 31, 32, 33 in einer schematisierten Ansicht dargestellt, wobei die Anordnung der Fördertrommeln 31, 32, 33 Bestandteil einer voranstehend beschriebenen Filteransetzmaschine F sind, die in Förderrichtung von stabförmigen Artikeln bezogen auf die queraxiale Förderrichtung der stabförmigen Artikel hintereinander angeordnet sind.

Die Fördertrommeln 31, 32, 33 weisen auf ihren äußeren Trommelkörpern jeweils Aufnahmemulden zur Aufnahme von stabförmigen Artikeln auf. Die Aufnahmemulden sind dabei nutförmig oder U-förmig auf den Trommelkörpern mit jeweils einem konstanten Durchmesser und/oder einer konstanten Kontur ausgebildet. Ferner weisen die Fördertrommeln 31, 32, 33 jeweils einen konstanten Teilungsabstand auf, d.h. dass der Abstand von zwei Muldenmittenachsen von jeweils zwei benachbarten Aufnahmemulden konstant ist. Mit anderen Worten: Der Teilungsabstand zwischen zwei Aufnahmemulden ist nicht variierbar. Darüber hinaus sind die Aufnahmemulden in ihrer Form nicht veränderbar und weisen einen vorbestimmten, festen Durchmesser und/oder eine feste Kontur auf.

In Ergänzung zum Ausführungsbeispiel in Fig. 1 können im Trommellauf oder in der Trommelanordnung auch eine oder mehrere Teilungsveränderungstrommeln vorhanden sein, für die das zuvor Gesagte ebenfalls gilt, mit der Ausnahme, dass der Teilungsabstand auf den jeweiligen Teilungsveränderungstrommeln nicht konstant ist.

Die Fördertrommeln 31, 32, 33 werden von (hier nicht dargestellten) Antrieben oder einem (hier nicht dargestellten) Antrieb angetrieben, so dass die Fördertrommel 31, 32, 33 um ihre jeweiligen Rotationsachsen 41, 42, 43 angetrieben werden.

In Fig. 2a ist schematisch dargestellt, dass die Fördertrommeln 31, 32, 33 stabförmige Artikel 21 (als stabförmige Artikel einer ersten Art) fördern, wobei in einem Übergabebereich 35a die stabförmigen Artikel 21 von der Fördertrommel 31 an die nachfolgende Fördertrommel 32 übergeben werden. Anschließend werden die stabförmigen Artikel 21 auf der Fördertrommel 32 zu einem zweiten Übergabebereich 36a zwischen der Fördertrommel 32 und der nachfolgenden Fördertrommel 33 gefördert, so dass im Übergabebereich 36a die stabförmigen Artikel 21 an die Fördertrommel 33 übergeben werden.

Die Fördertrommeln 31, 32, 33 sind für die Förderung der stabförmigen Artikel 21 derart angeordnet sowie ausgerichtet, dass in den Übergabebereichen 35a, 36a eine produktschonende Übergabe der Artikel 21 erfolgt.

In Fig. 2a sind jeweils die Kreisbögen 61a, 62a, 63a der Mittenlängsachsen der auf den jeweiligen Fördertrommeln 31, 32, 33 geförderten stabförmigen Artikel 21 schematisch eingezeichnet.

An der Filteransetzmaschine F werden Filterzigaretten hergestellt, wobei als stabförmige Artikel 21 Tabakstöcke und/oder Filterstopfen einzeln oder gruppenweise gefördert werden. Hierbei werden an der Filteransetzmaschine F Filterzigaretten mit einem vorbestimmten Durchmesser hergestellt. Nach Beendigung der Produktion an der Filteransetzmaschine F werden die Fördertrommeln 31, 32, 33 angehalten.

Um anschließend an der Filteransetzmaschine F Filterzigaretten mit einem kleineren Durchmesser herzustellen, wobei die Fördertrommeln 31, 32, 33 in ihren geometrischen Ausbildungen nicht verändert werden, würde unter Beibehaltung derselben Fördertrommeln 31, 32, 33 der Abstand zwischen den Fördertrommeln 31, 32, 33 in den Übergabebereichen 35b, 36b (vgl. Fig. 2b) vergrößert sein, da die Fördertrommeln 31, 32, 33 jeweils eine feste, d.h. nicht veränderbare Muldenform aufweisen, so dass bei Förderung von stabförmigen Artikeln 22 (als stabförmige Artikel einer zweiten Art), die einen kleineren Durchmesser als die stabförmigen Artikel 21 gemäß der in Fig. 2a dargestellten Ausführungsform haben, bei der Übergabe der stabförmigen Artikel 22 in den vergrößerten Übergabebereichen 35b, 36b diese ungewollt mechanisch beansprucht werden, da der Durchmesser des Kreisbogens 61b, 62b, 63b der Mittenlängsachsen der geförderten stabförmigen Artikel 22 auf jeder Fördertrommel 31, 32, 33 kleiner ist als der Durchmesser des Kreisbogens 61a, 62a, 63a der Mittenlängsachsen der stabförmigen Artikel 21, die einen größeren Durchmesser aufweisen (vgl. Fig. 2a, 2b).

In den Fig. 2b und 2c sind jeweils die Kreisbögen 61b, 62b, 63b der Mittenlängsachsen der auf den jeweiligen Fördertrommeln 31, 32, 33 geförderten stabförmigen Artikel 22 eingezeichnet, wobei der Durchmesser der stabförmigen Artikel 22 kleiner als der Durchmesser der stabförmigen Artikel 21 (vgl. Fig. 2a) ist, so dass beispielsweise der Durchmesser des Kreisbogens 61b der Mittenlängsachsen der geförderten stabförmigen Artikel 22 der Fördertrommel 31 kleiner ist als der Durchmesser des Kreisbogens 61a der Mittenlängsachsen der stabförmigen Artikel 21. Dies gilt auch in entsprechender Weise für die weiteren Fördertrommeln 32, 33.

Aufgrund der konstanten Durchmesser der Aufnahmemulden und/oder festen, d.h. nicht veränderbaren Kontur der Aufnahmemulden der Fördertrommeln 31, 32, 33 sind die Durchmesser der Kreisbögen der Mittenlängsachsen der stabförmigen Artikel 21, 22 bei Variation der Durchmesser der zu fördernden stabförmigen Artikel 21, 22 verschieden.

Um die mechanische Beanspruchung der stabförmigen Artikel 22 bei Förderung an der Filteransetzmaschine herabzusetzen, wird die Fördertrommel 32 unter Verwendung einer (hier nicht dargestellten) Verstelleinrichtung vertikal nach oben versetzt bzw. bewegt, um die Fördertrommel 32 an die benachbarten Fördertrommeln 31, 33 in den Übergabebereichen 35, 36 anzunähern, mit dem Ziel, die Abstände der Übergabebereiche 35a, 36a sowie die Abstände der Fördertrommeln 31, 32, 33 mit den kleineren, produktschonenden Übergabebereichen 35a, 36a wieder zu erreichen.

Die vertikale Bewegung der Fördertrommel 32 kann dabei in einer Ausgestaltung unter Verwendung einer motorisch angetriebenen und automatisierten Verstelleinrichtung erfolgen. Darüber hinaus ist es im Rahmen der Erfindung möglich, dass die Fördertrommel 32 unter Verwendung einer Linearführung und/oder Spanndornen verschiebbar ist.

Zum Bewegen der Fördertrommel 32 werden beispielsweise Spannelemente gelöst und die Fördertrommel wird anschließend in eine geänderte Position oder Arbeitsposition (vgl. Fig. 2c) verschoben. Anschließend wird die Fördertrommel 32 durch die Spannelemente wieder gesichert. Durch die Verschiebung der Fördertrommel 32 wird der Abstand zwischen den Rotationsachsen 41, 42 sowie zwischen den Rotationsachsen 42, 43 der jeweils benachbarten Fördertrommeln 31, 32, 33 verkürzt.

Bei Formatwechsel von kleineren zu größeren Durchmessern der stabförmigen, herzustellenden Artikel wird sich der Abstand der Rotationsachsen der Fördertrommel vergrößern.

In einer weiteren (hier nicht dargestellten) Ausführungsform ist es im Rahmen der Erfindung denkbar, dass die Fördertrommeln an einer Filteransetzmaschine auch horizontal verschiebbar ausgebildet sind.

Nach Verschieben oder Anheben der Fördertrommel 32 in Bezug auf die benachbarten Fördertrommeln 31, 33 wird die Produktion von Filterzigaretten an der Filteransetzmaschine F mit stabförmigen Artikeln 22 fortgesetzt, die einen kleineren Durchmesser als die vorangehende Produktion von Filterzigaretten mit stabförmigen Artikeln 21 (vgl. Fig. 2a) aufweisen.

Durch das Verschieben der Fördertrommel 32 entfällt bei einem Produktionswechsel an der Filteransetzmaschine ein Tausch der Fördertrommeln, wodurch die Umbauzeiten für einen Formatwechsel an der Filteransetzmaschine und die Anzahl der Formatumbauteile reduziert werden.

### Bezugszeichenliste

- 21: stabförmige Artikel
- 22: stabförmige Artikel
- 31: Fördertrommel
- 32: Fördertrommel
- 33: Fördertrommel
- 35a, 35b: Übergabebereich
- 36a, 36b: Übergabebereich
- 41: Rotationsachse
- 42: Rotationsachse
- 43: Rotationsachse
- 50: Zuführeinrichtung
- 51: Förderkanal
- 61a, 61b, 61c: Kreisbogen
- 62a, 62b, 62c: Kreisbogen
- 100: Filtermagazin
- 101: Einlass
- 110: Belagapparat
- 111: Belagpapierstreifen
- 112: Saugwalze
- 113: Messerwalze
- 114: Entnahmetrommel
- 115: Spreiztrommel
- 116: Staffeltrommel
- 117: Einlegetrommel
- 118: Übernahmetrommel
- 119: Schneidtrommel
- 120: Spreiztrommel
- 121: Zusammenstelltrommel
- 122: Fördertrommel
- 126: Rolltrommel
- 127: Rolleinrichtung
- 128: Fördertrommel
- 129: Schneidtrommel
- 132: Schneidmesser
- 133: Spreiztrommel
- 134: Prüftrommel
- 135: Prüftrommel
- 136: Fördertrommel
- 137: Entnahmetrommel
- 138: Wendetrommel
- 139: Wendeeinrichtung
- 140: Fördertrommel
- 141: Abgabetrommel
- 144: Prüforgan
- 145: Prüforgan
- 211: Tabakstockzufuhreinrichtung
- 212: Filterzufuhreinrichtung
- 213: Belagpapierzufuhreinrichtung
- 214: Zigarettenherstelleinrichtung
- 215: Zigarettenprüfeinrichtung
- 216: Zigarettenabgabeeinrichtung

- F: Filteransetzmaschine
- M: Trommelanordnung (Filterstopfen)
- P: Zigarettenstrangmaschine
- T: Trommelanordnung (Tabakstöcke)

## Patentansprüche

1. Verfahren zum Fördern von stabförmigen Artikeln der Tabak verarbeitenden Industrie (21, 22), insbesondere Filterzigaretten oder deren stabförmigen Komponenten, wobei die stabförmigen Artikel (21, 22) in Aufnahmemulden von Fördertrommeln (31, 32, 33) unter Rotation der Fördertrommeln (31, 32, 33) queraxial gefördert werden, wobei die um jeweils eine eigene Rotationsachse (41, 42, 43) rotierenden oder rotierbaren Fördertrommeln (31, 32, 33) in queraxialer Förderrichtung der stabförmigen Artikel (21, 22) hintereinander angeordnet sind, wobei die in wenigstens einer Reihe queraxial hintereinander angeordneten stabförmigen Artikel (21, 22) von einer Fördertrommel (31, 32, 33) an eine nachfolgende Fördertrommel (31, 32, 33) übergeben werden, **dadurch gekennzeichnet, dass** bei einem Wechsel der zu fördernden stabförmigen Artikel (21, 22) von stabförmigen Artikeln (21) einer ersten Art mit einem vorbestimmten Durchmesser zu stabförmigen Artikeln (22) einer zweiten Art mit einem vorbestimmten Durchmesser, wobei der Durchmesser der Artikel (21) der ersten Art und der Durchmesser der Artikel (22) der zweiten Art sich voneinander unterscheiden, die für die Förderung der stabförmigen Artikel (21, 22) vorgesehenen Fördertrommeln (31, 32, 33) beibehalten werden, wobei für den Wechsel der zu fördernden stabförmigen Artikel (21, 22) wenigstens eine Fördertrommel (32) in ihrer Rotationsachse (42) in Bezug auf wenigstens eine benachbarte, insbesondere stabförmige Artikel abgebende und/oder stabförmige Artikel aufnehmende, Fördertrommel (31, 33) und deren, insbesondere ortsfeste, Rotationsachse (41, 43) versetzt wird, so dass der Abstand der Rotationsachsen (41, 42, 43) der benachbarten Fördertrommeln (31, 32, 33) für die Förderung der stabförmigen Artikel (21) der ersten Art gegenüber dem Abstand der Rotationsachsen der benachbarten Fördertrommel (31, 32, 33) für die Förderung der stabförmigen Artikel (22) der zweiten Art verändert ist oder wird.

2. Verfahren nach Anspruch 1, **dadurch gekennzeichnet, dass** eine Fördertrommel (32), die zwischen einer Artikel (21, 22) abgebenden Fördertrommel (31) und einer Artikel (21, 22) aufnehmenden Fördertrommel (33) angeordnet ist, in Bezug auf die, vorzugsweise ortsfeste, Rotationsachse (41) der Artikel (21, 22) abgebenden Fördertrommel (31) und/oder in Bezug auf die Rotationsachse (43) der Artikel (21, 22) aufnehmenden Fördertrommel (33), insbesondere linear, versetzt wird.

3. Verfahren nach Anspruch 1 oder 2, **dadurch gekennzeichnet, dass** die stabförmigen Artikel (21) der ersten Art und die stabförmigen Artikel (22) der zweiten Art im Wechsel auf denselben Fördertrommeln (31, 32, 33), insbesondere einer Maschine der Tabak verarbeitenden Industrie, gefördert werden, wobei die Durchmesser und/oder die Konturen der, vorzugsweise nutförmigen oder U-förmigen, Aufnahmemulden der jeweiligen Fördertrommel (31, 32, 33) konstant bleiben.

## Claims

1. Method for conveying rod-shaped articles of the tobacco-processing industry (21, 22), in particular filter cigarettes or the rod-shaped components thereof, wherein the rod-shaped articles (21, 22) are conveyed cross-axially in receiving troughs of conveying drums (31, 32, 33) by means of rotation of the conveyor drums (31, 32, 33), wherein the conveying drums (31, 32, 33), each of which rotates or can rotate about its own axis of rotation (41, 42, 43), are arranged one after the other in the cross-axial conveying direction of the rod-shaped articles (21, 22), wherein the rod-shaped articles (21, 22) arranged one after the other cross-axially in at least one row are transferred from one conveying drum (31, 32, 33) to a subsequent conveying drum (31, 32, 33), **characterized in that**, in the event of changing the rod-shaped articles (21, 22) to be conveyed from rod-shaped articles (21) of a first type having a predetermined diameter to rod-shaped articles (22) of a second type having a predetermined diameter, wherein the diameter of the articles (21) of the first type and the diameter of the articles (22) of the second type differ from one another, the conveying drums (31, 32, 33) provided for conveying the rod-shaped articles (21, 22) are retained, wherein, for the change of the rod-shaped articles (21, 22) to be conveyed, the axis of rotation (42) of at least one conveying drum (32) is shifted with respect to at least one adjacent, in particular rod-shaped article-releasing and/or rod-shaped article-receiving, conveying drum (31, 33) and the, in particular fixed, axis of rotation (41, 43) thereof, so that the spacing of the axes of rotation (41, 42, 43) of the adjacent conveyor drums (31, 32, 33) for conveying the rod-shaped articles (21) of the first type is changed relative to the spacing of the axes of rotation of the adjacent conveying drum (31, 32, 33) for conveying the rod-shaped articles (22) of the second type.

2. Method according to Claim 1, **characterized in that** a conveying drum (32), which is located between a conveying drum (31) releasing articles (21, 22) and a conveying drum (33) receiving articles (21, 22), is shifted, in particular linearly, in relation to the, preferably fixed, axis of rotation (41) of the conveying drum (31) releasing articles (21, 22) and/or in relation to the axis of rotation (43) of the conveying drum (33) receiving articles (21, 22).

3. Method according to Claim 1 or 2, **characterized in that** the rod-shaped articles (21) of the first type and the rod-shaped articles (22) of the second type are alternately conveyed on the same conveying drums (31, 32, 33), in particular of a machine of the tobacco-processing industry, wherein the diameters and/or the contours of the, preferably groove-shaped or u-shaped, receiving troughs of the respective conveying drum (31, 32, 33) remain constant.

## Revendications

1. Procédé pour transporter des articles en forme de tiges (21, 22) de l'industrie de transformation du tabac, en particulier des cigarettes à filtres ou leurs composants en forme de tiges, dans lequel les articles en forme de tiges (21, 22) sont transportés dans la direction axiale transversale dans des auges de réception de tambours transporteurs (31, 32, 33) par la rotation des tambours transporteurs (31, 32, 33), les tambours transporteurs (31, 32, 33), tournant ou pouvant tourner chacun autour de son propre axe de rotation (41, 42, 43), étant disposés les uns derrière les autres dans la direction axiale transversale des articles en forme de tiges (21, 22), les articles en forme de tiges (21, 22), disposés les uns derrière les autres dans la direction axiale transversale sur au moins une rangée, étant transférés d'un tambour transporteur (31, 32, 33) à un tambour transporteur suivant (31, 32, 33), **caractérisé en ce que**, lors d'un changement d'articles en forme de tiges à transporter (21, 22) pour passer d'articles en forme de tiges (21) d'un premier type ayant un diamètre prédéterminé à des articles en forme de tiges (22) d'un deuxième type ayant un diamètre prédéterminé, le diamètre des articles (21) du premier type et le diamètre des articles (22) du deuxième type étant différents l'un de l'autre, les tambours transporteurs (31, 32, 33) prévus pour le transport des articles en forme de tiges (21, 22) sont conservés, au moins un tambour transporteur (32) ayant son axe de rotation (42) décalé, pour le changement d'articles en forme de tiges à transporter (21, 22), par rapport à au moins un tambour transporteur (31, 33) voisin, en particulier délivrant des articles en forme de tiges et/ou recevant des articles en forme de tiges, et à son axe de rotation (41, 43), en particulier fixe, de telle sorte que la distance entre les axes de rotation (41, 42, 43) des tambours transporteurs (31, 32, 33) voisins destinés au transport des articles en forme de tiges (21) du premier type est modifiée par rapport à la distance entre les axes de rotation des tambours transporteurs (31, 32, 33) voisins destinés au transport des articles en forme de tiges (22) du deuxième type.

2. Procédé selon la revendication 1, **caractérisé en ce qu'**un tambour transporteur (32), qui est disposé entre un tambour transporteur (31) délivrant des articles (21, 22) et un tambour transporteur (33) recevant des articles (21, 22), est décalé, en particulier de façon linéaire, par rapport à l'axe de rotation (41), de préférence fixe, du tambour transporteur (31) délivrant des articles (21, 22) et/ou par rapport à l'axe de rotation (43) du tambour transporteur (33) recevant des articles (21, 22).

3. Procédé selon la revendication 1 ou 2, **caractérisé en ce que** les articles en forme de tiges (21) du premier type et les articles en forme de tiges (22) du deuxième type sont transportés en alternance sur les mêmes tambours transporteurs (31, 32, 33), en particulier d'une machine de l'industrie de transformation du tabac, les diamètres et/ou les contours des auges de réception, de préférence en forme de gorge ou en U, de chacun des tambours transporteurs (31, 32, 33) restant constants.
